# FASCICULE DE BREVET EUROPEEN

(11) **EP 2 276 811 B1**
(45) Date de publication et mention de la délivrance du brevet: **25.05.2016**
(21) Numéro de dépôt: 09738340.0
(22) Date de dépôt: 16.04.2009
(51) Int. Cl.: C08L 95/00, C08L 91/06, C08L 93/02, C08K 5/20, C09D 195/00, C09D 191/06, C09D 193/02

(54) **COMPOSITION D'ASPHALTE POUR LA RÉALISATION DE REVÊTEMENTS À BASSE TEMPÉRATURE**
ASPHALTZUSAMMENSETZUNG ZUR HERSTELLUNG VON STRASSENBELÄGEN BEI NIEDRIGEN TEMPERATUREN
ASPHALT COMPOSITION FOR PRODUCING SURFACINGS AT LOW TEMPERATURE

(30) Priorité: 22.04.2008 FR 0802238
(43) Date de publication de la demande: 26.01.2011
(73) Titulaire: Eiffage Travaux Publics, 93330 Neuilly Sur Marne (FR)
(72) Inventeur: ANTOINE, Jean-Pierre, F-69340 Francheville (FR); LOUP, Frédéric, F-69100 Villeurbanne (FR)
(74) Mandataire: Plaçais, Jean Yves
(86) Numéro de dépôt international: PCT/FR2009/000444
(87) Numéro de publication internationale: WO 2009/133306

(56) Documents cités:
- EP-A- 1 845 134

## Description

L'invention a trait à une composition d'asphalte coulé.

Les asphaltes coulés sont principalement réalisés par mélange d'un liant hydrocarboné d'origine fossile et de charges solides minérales, le plus souvent d'origine naturelle.

Les charges solides comprennent généralement des fines, qui sont mélangées au liant pour former un mastic, et des granulats, qui sont mélangés audit mastic.

Traditionnellement, les asphaltes sont ainsi constitués de 6 à 23 % de liant et de 77 à 94 % de charges minérales, ces teneurs s'entendant en masse.

Ces asphaltes traditionnels sont coulés à haute température, c'est-à-dire à une température comprise entre 200 °C et 270 °C environ, généralement entre 210 °C et 250 °C.

Les asphaltes de ce type sont utilisés dans la construction de routes, d'aménagements urbains, dans la réalisation de sols sportifs ou industriels, ou encore dans la réalisation d'étanchéité de bâtiments ou d'ouvrages de génie civil.

La température élevée à laquelle les asphaltes traditionnels doivent être coulés présente de nombreux inconvénients, tels que d'importants dégagements de fumées, liés à la décomposition du liant, et des dépenses énergétiques élevées pour amener l'ensemble des composants à la température souhaitée.

EP 1 845 134 divulgue un liant hydrocarboné pour la réalisation de revêtements routiers comprenant un bitume, une composition de cire comprenant une cire et un fluxant à base de matières grasses d'origine naturelle ayant subi une fonctionnalisation chimique par une réaction d'oxydation. La mise en oeuvre de ce liant dégagerait moins de composés organiques volatils.

Pour abaisser la température de mise en oeuvre des asphaltes, il a été proposé, en particulier par le document FR 2 721 936, d'ajouter au liant une cire d'hydrocarbure, dans une proportion pouvant atteindre 15 % en masse du liant.

Ceci permet d'abaisser la température de mise en oeuvre d'environ 30 à 40 °C.

Il est souhaitable d'abaisser encore cette température d'application.

L'augmentation de la teneur en cire d'hydrocarbure pourrait éventuellement permettre d'atteindre des températures encore inférieures, mais elle conduit aussi à une dégradation inacceptable des propriétés mécaniques de l'asphalte.

Dans le document FR 2 855 523, il a été proposé d'ajouter, en plus d'une cire d'hydrocarbure, un second additif, constitué par une cire d'ester d'acide gras ayant un point de fusion inférieur à 85 °C. Ladite cire d'ester d'acide gras peut être d'origine synthétique, végétale ou végétale fossile.

Ces asphaltes n'ont donné que partiellement satisfaction.

Les revêtements réalisés avec de tels asphaltes sont par exemple sujets à des phénomènes de glissance et de matification (aspect mat de la surface du revêtement) importants, principalement dus à la migration des cires en surface et à la teneur importante en cire (pouvant atteindre 15 % en masse du liant).

L'objet de l'invention est d'améliorer la situation.

L'invention vise une composition d'asphalte principalement constituée d'une charge minérale solide et d'un liant comprenant une base de bitume et des additifs de réglage de propriétés physico-chimiques, dans laquelle ces additifs de réglage de propriétés physico-chimiques comprennent une cire d'origine animale et un ou plusieurs amides d'éthylène diamine. La teneur en amides d'éthylène diamine est comprise entre 0,05 % et 0,3 % en masse. La cire d'origine animale est en proportion majoritaire par rapport aux amides d'éthylène diamine.

L'invention vise également un procédé de fabrication d'une composition d'asphalte comprenant la prévision d'une base de bitume, l'ajout au bitume d'une partie au moins des charges minérales solides et l'ajout de cire animale et d'un ou plusieurs amides d'éthylène diamine.

Une telle composition permet un abaissement significatif de la température de mise en oeuvre. Cette composition est dépourvue de cire d'hydrocarbure, laquelle n'est ni renouvelable ni biodégradable du fait de son origine synthétique.

En outre, une telle composition d'asphalte permet d'utiliser une quantité moins importante d'additifs, lesquels sont principalement constitués de cire, que les compositions d'asphaltes classiques. Il en découle plusieurs avantages.

La Demanderesse a également constaté qu'une telle composition d'asphalte présente des phénomènes de glissance et de matification très limités, en particulier par rapport aux compositions traditionnelles.

De plus, les cires d'origine animale, dont la cire d'abeille et la cire de Shellac, sont à la fois renouvelables et biodégradables. Il en résulte une composition d'asphalte très peu polluante, en particulier en cas de phénomène de migration des additifs, par exemple du fait du ruissellement, phénomène auquel les revêtements asphalte sont souvent sujets. Ce caractère peu polluant est encore renforcé par les faibles quantités d'additifs utilisées.

Une telle composition d'asphalte permet encore d'utiliser, en tant qu'additifs, de la cire d'origine animale en proportion majoritaire par rapport aux amides d'éthylène diamine. Ceci renforce encore le caractère non polluant ou peu polluant de de la composition d'asphalte selon l'invention.

Une telle composition permet encore l'utilisation d'additifs qui sont des coproduits, par exemple du miel pour la cire d'abeille et de la gomme laque pour la cire de Shellac. Ces coproduits n'ont pas besoin d'être synthétisés, à la différence des additifs des asphaltes connus.

L'invention est illustrée ci-après par des exemples.

### Exemple 1

On réalise une composition d'asphalte à l'aide d'un malaxeur ou pétrin fixe, ici mû à une vitesse d'environ 15 tours par minute.

On introduit 71 kilogrammes de bitume à une température voisine de 160 °C. On utilise ici un bitume 35/50 acidifié pour asphalte, par exemple du type commercialisé par la Société SHELL sous la référencée 35/50 ASPHALTE T.

En tant qu'additifs, on ajoute 2 kg de cires de Shellac et un 1 kg de N-N'-éthylène bis-stéaramide, ou EBS, à température ambiante.

On ajoute ensuite l'ensemble des charges minérales solides à une température voisine de 160 °C. Ces charges minérales solides sont ici constituées de 340 kg de fines, ou filler, de 276 kg de sable, et de 350 kg de gravillons.

On utilise ici des fines calcaires, par exemple telles que commercialisées par la Société OMYA sous la référence Etanchecarr P2, un sable roulé de granularité 0/4, de type silico-calcaire, et des gravillons de granularité 4/6, de type de silico-calcaire.

Le sable et les gravillons sont par exemple du type provenant de la carrière NIEVROZ de la Société G.R.A.

L'ensemble subit une phase de malaxage, d'une durée de 30 minutes environ

Après une phase de malaxage supplémentaire, au cours de laquelle la température du malaxeur est portée à 180 °C, la composition d'asphalte est prête pour application. Cette phase de malaxage supplémentaire dure environ 30 minutes.

À la sortie du malaxeur, la température de la composition d'asphalte est comprise entre 170 °C et 180 °C. La température d'application de cette composition d'asphalte est comprise entre 140 °C et 180 °C.

Il a été constaté que cette composition possède un comportement à la mise en oeuvre proche de la composition d'asphalte de référence à chaud, c'est-à-dire de la même composition fabriquée à 230 °C.

Une maniabilité, une capacité d'auto-réparation, ainsi qu'une capacité de recouvrement des joints sensiblement supérieures à la composition d'asphalte de référence à chaud ont également été remarquées.

La composition selon l'invention présente une température limite de travail inférieure de 140 °C alors que la même composition à chaud ne peut être appliquée de manière satisfaisante à une température inférieure à 210 °C.

La brillance et l'homogénéité de la composition d'asphalte selon l'invention sont identiques à la formule de référence fabriquée à 230 °C.

Le revêtement obtenu à partir de cette composition d'asphalte présente un état de surface, c'est-à-dire une rugosité, tout à fait satisfaisante. Les gravillons sont répartis de manière homogène à la surface de ce revêtement.

Pour cette composition, on a mesuré des indentations de 18 dixièmes de millimètre après 1 heure de malaxage, et de 19 dixièmes de millimètre après 2 heures de malaxage.

Les essais d'indentation ont été réalisés conformément à la norme française NF EN 12 687-21 (essais B:40 °C et 525 Newton). Avant essai, l'échantillon a été réchauffé pendant 2 heures à 180 °C, puis homogénéité avant coulage.

Cette même indentation, mesurée en laboratoire, est de 24 dixièmes de millimètre pour la référence à chaud (230 °C).

On a mesuré une maniabilité de 88 Newton à 163 °C. La composition d'asphalte traditionnel mise en oeuvre à haute température présente en général une maniabilité de 75 Newton à 205 °C. Ces maniabilités peuvent être considérées comme comparables compte tenu de l'incertitude de la mesure.

La maniabilité a été mesurée au moyen d'un maniabilimètre dit "Nynas".

### Exemple 2

On réalise une composition d'asphalte, par exemple pour un revêtement de trottoir (asphalte AT 0/6).

Cette composition est obtenue à partir de granulats de granularité comprise entre 0 et 6 millimètres. Ces granulats sont mélangés à un mastic comprenant 7,8 % de bitume et de la cire d'origine animale et de l'EBS en tant qu'additifs de réglage. La teneur en cire est comprise entre 0,05 % et 0,2 %. La teneur en EBS est comprise entre 0,1 % et 0,2 %. La teneur total en additifs est voisine de 0,3 %. On utilise ici de la cire d'abeille.

Le bitume utilisé est du type 35/50 acidifié pour asphalte, tel que commercialisé par exemple par la société NYNAS ANVERS.

Les teneurs ci-dessus sont des teneurs en masse et se rapportent à la composition d'asphalte dans son ensemble.

Les températures de fabrication et de mise en oeuvre sont comprises entre 150 °C et 180 °C.

L'indentation mesurée est voisine de 54 dixièmes de millimètre, lorsque la composition a été fabriquée à 180 °C, avec les additifs. Lorsque la même composition est coulée à chaud, par exemple à 210 °C, elle présente une indentation de 59 dixièmes de millimètre.

### Exemple 3

On réalise une composition d'asphalte, par exemple pour un revêtement de chaussée (asphalte AC 0/6).

Cette composition est identique à la composition de l'exemple 2 à la différence d'une teneur en bitume de 7,4 %.

L'indentation de cette composition, fabriquée à 180 °C, a été mesurée à 24 dixièmes de millimètre. Une composition analogue fabriquée à 210 °C présente une indentation mesurée de 39 dixièmes de millimètre.

L'ajout des additifs est réalisé après avoir effectué le mélange du bitume et des charges solides minérales.

L'ajout de cire d'origine animale, telle que la cire d'abeille ou de Shellac, permet d'abaisser les températures de fabrication et d'application de la composition asphaltique selon l'invention.

La composition selon l'invention peut être appliquée à une température comprise entre 150 °C et 170 °C, alors que les compositions classiques sont appliquées à des températures supérieures à 210 °C.

L'abaissement des températures de fabrication et d'application permet des économies d'énergie importantes, en particulier par diminution de l'énergie nécessaire au chauffage des composants, puis à leur maintien en température, en particulier dans des véhicules de transport.

Cet abaissement de température entraîne également une réduction avantageuse des émissions de fumées.

Les conditions de travail des opérateurs se trouvent également améliorées. Les nuisances subies par les riverains sont également diminuées : diminutions des fumées, des odeurs et remise en service plus rapide des zones traitées.

L'abaissement permet enfin un enrobage au moyen de postes d'enrobage spécifiques aux enrobés bitumineux à chaud, puisque ceux-ci travaillent généralement à une température comprise entre 150 et 190 °C.

Les caractéristiques suivantes sont données à titre indicatif pour le N-N'-éthylène bis-stéaramide :

| | |
|---|---|
| Point de fusion | entre 140 et 150 °C |
| Poids moléculaire | entre 560 et 600 g/mol |

Les caractéristiques suivantes sont données à titre indicatif pour la cire de gomme laque (ou de Shellac) :

| | |
|---|---|
| Point de fusion | entre 75 et 86 °C |

Les caractéristiques suivantes sont données à titre indicatif pour la cire d'abeille :

| | |
|---|---|
| Point de fusion | environ 65 °C |

Grâce aux teneurs en additifs, en particulier en cire, très faibles, notamment comparées aux teneurs correspondantes des asphaltes connus, les phénomènes de matification et de glissance sont réduits, et même pratiquement inexistants.

L'invention n'est pas limitée aux modes de réalisation décrit ci-dessus, à titre d'exemples uniquement, mais englobe toutes les variantes que pourra envisager l'homme de l'art.

En particulier :
- On a décrit l'emploi de N-N'-éthylène bis-stéaramide en tant qu'additif. Un tel emploi est préférentiel du fait de la qualité des résultats obtenus. Cependant, l'emploi, en remplacement ou en complément, d'une ou plusieurs molécules de la classe des amides d'éthylène diamine n'est pas exclu dans la mesure où des résultats de bonne qualité sont obtenus avec ces molécules.
- Dans l'exemple 1, l'ensemble des charges minérales solides a été ajouté de manière simultanée à la composition. Dans certains cas, une partie seulement des charges minérales solides, par exemple un tiers en masse, peut être introduite avant les additifs de réglage, tandis que la partie restante de ces charges peut être ajoutée ultérieurement, par exemple tout de suite après l'introduction desdits additifs.
- Lorsqu'un pétrin fixe est utilisé pour la fabrication de la composition d'asphalte selon l'invention, cette fabrication comprend généralement l'introduction du bitume, suivie de l'introduction des charges minérales solides, dans un ordre éventuellement variable selon l'installation industrielle comprenant ce pétrin fixe, et s'achèvera par une phase de malaxage de plusieurs heures.
- Lorsqu'un malaxeur rapide est employé, par exemple du type utilisé pour la réalisation d'enrobés bitumineux, l'ensemble des composants peut être introduit de façon pratiquement simultanée. La phase de malaxage peut être réduite à quelques secondes.
- Quelque soit l'outil utilisé, la composition d'asphalte peut être ensuite introduite dans un camion pétrin ou un camion mélangeur, dans lequel le pétrissage de la composition va se poursuivre et s'achever pendant l'acheminement vers le lieu de mise en oeuvre. Une telle phase de pétrissage est particulièrement importante lorsqu'un malaxeur rapide a été utilisé, en raison de la très courte durée de la phase de malaxage qui s'y déroule.
- Les additifs de la composition selon l'invention peuvent être introduits en cours de fabrication, dans le bitume. Ceci est préférentiel lorsqu'un pétrin fixe est utilisé.
- Tout ou partie des additifs peut également être ajouté à la fin de la fabrication, par exemple dans la cuve du camion mélangeur.
- Les compositions d'asphalte comprenant une teneur globale en additifs voisine de 0,3 % en masse sont actuellement préférées. Cependant, il n'est pas exclut, notamment pour des applications particulières, de réaliser des compositions avec des teneurs en additifs atteignant 0,5 %, et jusqu'à 1 % en masse.
- Seuls une cire d'origine animale et de l'EBS ont été présentés en tant qu'additifs. Cela correspond à une réalisation actuellement préférée de l'invention. Dans certains cas très particulier, il n'est pas exclu d'ajouter un ou plusieurs autres additifs, pour adapter plus précisément la composition d'asphalte aux conditions de mise en oeuvre.

## Revendications

1. Composition d'asphalte principalement constituée de charges minérales solides et d'un liant comprenant une base de bitume et des additifs de réglage de propriétés physico-chimiques, **caractérisé en ce que** ces additifs de réglage de propriétés physico-chimiques comprennent une cire d'origine animale et un ou plusieurs amides d'éthylène diamine, **en ce que** la teneur en amides d'éthylène diamine est comprise entre 0,05 % et 0,3 % en masse, et **en ce que** la cire d'origine animale est en proportion majoritaire par rapport aux amides d'éthylène diamine.

2. Composition selon la revendication 1, dans lequel la teneur en additifs est inférieure à 1 % en masse.

3. Composition selon l'une des revendications 1 et 2, dans laquelle la teneur en cire d'origine animale est comprise entre 0,05 % et 0,2 % en masse.

4. Composition selon l'une des revendications précédentes, dans laquelle la teneur en bitume est comprise entre 6 % et 23 % en masse.

5. Composition selon l'une des revendications précédentes, dans laquelle la cire d'origine animale comprend principalement de la cire d'abeille.

6. Composition selon l'une des revendications 1 à 4, dans laquelle la cire d'origine animale comprend principalement de la cire de gomme laque ou de Shellac.

7. Composition selon l'une des revendications précédentes, dans laquelle les additifs de réglage de propriétés physico-chimiques comprennent exclusivement une cire d'origine animale et un ou plusieurs amides d'éthylène diamine.

8. Composition selon l'une des revendications précédentes, dans laquelle les charges minérales solides comprennent un élément au moins parmi le groupe formé de fines, de sable roulé et de gravillons.

9. Composition selon l'une des revendications précédentes, dans laquelle le ou les amides d'éthylène diamine comprennent du N-N'-éthylène bis-stéaramide.

10. Procédé de fabrication d'une composition d'asphalte selon l'une des revendications précédentes, comprenant les étapes suivantes :
a) prévoir une base de bitume,
b) ajouter des charges minérales solides,
c) ajouter de la cire animale et un ou plusieurs amides d'éthylène diamine.

11. Procédé selon la revendication 10, dans lequel l'étape c) est réalisée après l'étape a) et avant l'étape b).

12. Procédé selon la revendication 10, dans lequel l'étape c) est réalisée après les étapes a) et b).

13. Procédé selon l'une des revendications 10 à 12, **caractérisé en ce que** la composition d'asphalte est appliquée à une température inférieure à 200 °C.

14. Procédé selon l'une des revendications 10 à 13, **caractérisé en ce que** la composition d'asphalte subit une phase de malaxage supplémentaire avant mise en oeuvre.

## Patentansprüche

1. Asphalt-Zusammensetzung, die hauptsächlich aus festen mineralischen Füllstoffen und einem Bindemittel gebildet ist, das eine Bitumen-Basis und Regulierungs-Additive für die physikalisch-chemischen Eigenschaften enthält, **dadurch gekennzeichnet, dass** die Regulierungs-Additive für die physikalisch-chemischen Eigenschaften ein Wachs tierischer Herkunft und ein oder mehrere Amide von Ethylendiamin aufweisen, dass der Gehalt an Amiden von Ethylendiamin zwischen 0,05 Massen-% und 0,3 Massen-% liegt, und dass das Wachs tierischer Herkunft einen Mehrheitsanteil im Verhältnis zu den Amiden von Ethylendiamin aufweist.

2. Zusammensetzung nach Anspruch 1, bei welcher der Gehalt an Additiven weniger als 1 Massen-% beträgt.

3. Zusammensetzung nach einem der Ansprüche 1 und 2, bei welcher der Gehalt an Wachs tierischer Herkunft zwischen 0,05 Massen-% und 0,2 Massen-% liegt.

4. Zusammensetzung nach einem der vorhergehenden Ansprüche, bei welcher der Gehalt an Bitumen zwischen 6 Massen-% und 23 Massen-% liegt.

5. Zusammensetzung nach einem der vorhergehenden Ansprüche, bei welcher das Wachs tierischer Herkunft hauptsächlich Bienenwachs enthält.

6. Zusammensetzung nach einem der Ansprüche 1 bis 4, bei welcher das Wachs tierischer Herkunft hauptsächlich Gummilack-Wachs oder Schellack enthält.

7. Zusammensetzung nach einem der vorhergehenden Ansprüche, bei welcher die Regulierungs-Additive für die physikalisch-chemischen Eigenschaften ausschließlich ein Wachs tierischer Herkunft und ein oder mehrere Amide von Ethylendiamin enthalten.

8. Zusammensetzung nach einem der vorhergehenden Ansprüche, bei welcher die festen mineralischen Füllstoffe mindestens ein Element aus der Gruppe von Feinstoffen, ungebrochenem Sand und Splitt aufweisen.

9. Zusammensetzung nach einem der vorhergehenden Ansprüche, bei welcher das Amid oder die Amide von Ethylendiamin N-N'-Distearylethylendiamid aufweisen.

10. Verfahren zum Herstellen einer Asphalt-Zusammensetzung nach einem der vorhergehenden Ansprüche, umfassend die folgenden Schritte:
a) Vorsehen einer Bitumen-Basis,
b) Hinzufügen der festen mineralischen Füllstoffe,
c) Hinzufügen des Wachses tierischer Herkunft und eines oder mehrerer Amide von Ethylendiamin.

11. Verfahren nach Anspruch 10, bei welchem der Schritt c) nach dem Schritt a) und vor dem Schritt b) durchgeführt wird.

12. Verfahren nach Anspruch 10, bei welchem der Schritt c) nach den Schritten a) und b) durchgeführt wird.

13. Verfahren nach einem der Ansprüche 10 bis 12, **dadurch gekennzeichnet, dass** die Asphalt-Zusammensetzung bei einer Temperatur unterhalb von 200 °C angewendet wird.

14. Verfahren nach einem der Ansprüche 10 bis 13, **dadurch gekennzeichnet, dass** die Asphalt-Zusammensetzung vor dem Einsatz einer Zusatz-Rührphase unterzogen wird.

## Claims

1. Asphalt composition composed mainly of solid mineral fillers and of a binder comprising a bitumen base and additives for adjusting physico-chemical properties, **characterised in that** the additives for adjusting physico-chemical properties include a wax of animal origin and one or more amides of ethylenediamine, **in that** the content of amides of ethylenediamine is from 0.05% to 0.3% by mass, and **in that** the proportion of wax of animal origin is greater than the proportion of amides of ethylenediamine.

2. Composition according to claim 1, wherein the content of additives is less than 1% by mass.

3. Composition according to either claim 1 or claim 2, wherein the content of wax of animal origin is from 0.05% to 0.2% by mass.

4. Composition according to any one of the preceding claims, wherein the content of bitumen is from 6% to 23% by mass.

5. Composition according to any one of the preceding claims, wherein the wax of animal origin comprises mainly beeswax.

6. Composition according to any one of claims 1 to 4, wherein the wax of animal origin comprises mainly lac or shellac wax.

7. Composition according to any one of the preceding claims, wherein the additives for adjusting physico-chemical properties include only a wax of animal origin and one or more amides of ethylenediamine.

8. Composition according to any one of the preceding claims, wherein the solid mineral fillers include at least one element from the group formed of fines, rolled sand and gravel.

9. Composition according to any one of the preceding claims, wherein the amide or amides of ethylenediamine include(s) N,N'-ethylene bis-stearamide.

10. Method for producing an asphalt composition according to any one of the preceding claims, comprising the following steps:
a) providing a bitumen base,
b) adding solid mineral fillers,
c) adding animal wax and one or more amides of ethylenediamine.

11. Method according to claim 10, wherein step c) is carried out after step a) and before step b).

12. Method according to claim 10, wherein step c) is carried out after steps a) and b).

13. Method according to any one of claims 10 to 12, **characterised in that** the asphalt composition is applied at a temperature below 200°C.

14. Method according to any one of claims 10 to 13, **characterised in that** the asphalt composition undergoes an additional mixing phase before it is used.
